# EUROPEAN PATENT APPLICATION

(11) **EP 1 545 056 A1**
(43) Date of publication of application: **22.06.2005**
(21) Application number: 04257725.4
(22) Date of filing: 13.12.2004
(51) Int. Cl.: H04L 12/24

(54) **A system and method for end-to-end management of service level events**

(30) Priority: 15.12.2003 US 737606
(71) Applicant: Hewlett-Packard Development Company, L.P., Houston, TX 77070 (US)
(72) Inventor: Parkyn, Nicholas D., Oakville ON L6H4E5 (CA)
(74) Representative: Jackson, Richard Eric

(57) **Abstract**

A system and method for proactively managing a network (200) is disclosed. The method includes aggregating and consolidating inputs into real or potential service events (410) and applying service policy for determining impact of the events and annotating the events (430). The method also includes determining the availability of an automated corrective action for the events (430). In addition, the method includes generating service level trouble tickets (550) and dispatching the events to a service level manager (560) for performing business-related activities. Additionally, when automated corrective action is deemed to be available, the method includes dispatching an activation subsystem to implement the corrective action (560).

## Description

### TECHNICAL FIELD

Embodiments of the present invention relate to the field of computer services. Specifically, embodiments of the present invention relate to a service event manager for end-to-end management of service level events.

### BACKGROUND OF THE INVENTION

Service provider networks are composed of various network elements, such as switches and routers. These elements fall into different categories, depending on which part of the network they involve. For example, the access portion of the network would have access switches and access routers. Services can also span an aspect called "value added" service components in which the customers are provided access to applications, the internet, content (media/video) services and other similar or future services. In the case of end-to-end service, part of the service may be based on network access, and part may involve access to "value-added" services, each of which utilize different technologies. Therefore, there can be different technology domains rotated to a given service, and the technology domains can involve different types of equipment One technology domain is the telecommunications domain in which the equipment involved is that of network elements. Another example of a service technology domain is the value added service domain that uses computer platforms that host applications or content. Content can include web pages, video streams, etc.

The different technology domains comprise different aspects of the service end of a service provider's business. Each aspect can have different types of fault modes or levels of performance at any given point in time. Each of the technology domains can have a large number of fault modes and levels of performance that need to be measured on a regular and frequent basis to assure that each customer is receiving a level of service that is within certain agreed-to performance levels (service level objectives) which align with the service level agreements.

Typically an agreement exists between a service provider and a customer of the service, provider as to the level of service that the service provider agrees to provide to the customer. For example, a service provider of teleconferencing and a customer that uses the teleconferencing may agree upon a specific resolution and/or number of frames lost per unit of time. Service level agreements enable service providers and customers to determine not only the level of service that is expected to be provided, but also the price of the provided service. For example, a customer would typically pay less when there are service level violations.

If, for example, a customer is being provided a streaming video service for video conferencing and part of the network is experiencing dither and/or frame loss, then the network may not be running within the service level agreement for performance. Thus, the customer may not be receiving the quality of video that was provided for in a service level agreement, constituting a service level violation, and, consequently, would receive a discount based on that service level violation. The mapping is very complex from measured service performance through service level objectives to service level guarantees in the service level agreement which have meaning to the customer and the business. The reason for this complexity is: 1) measured service performance is a crisp, finite value; 2) service level guarantee in a service level agreement is often based on how the user or business interprets the performance (the "user experience") which can be a "fuzzy" value or interpretation; and 3) the notion of service level objectives lies in the middle between crisp and fuzzy.

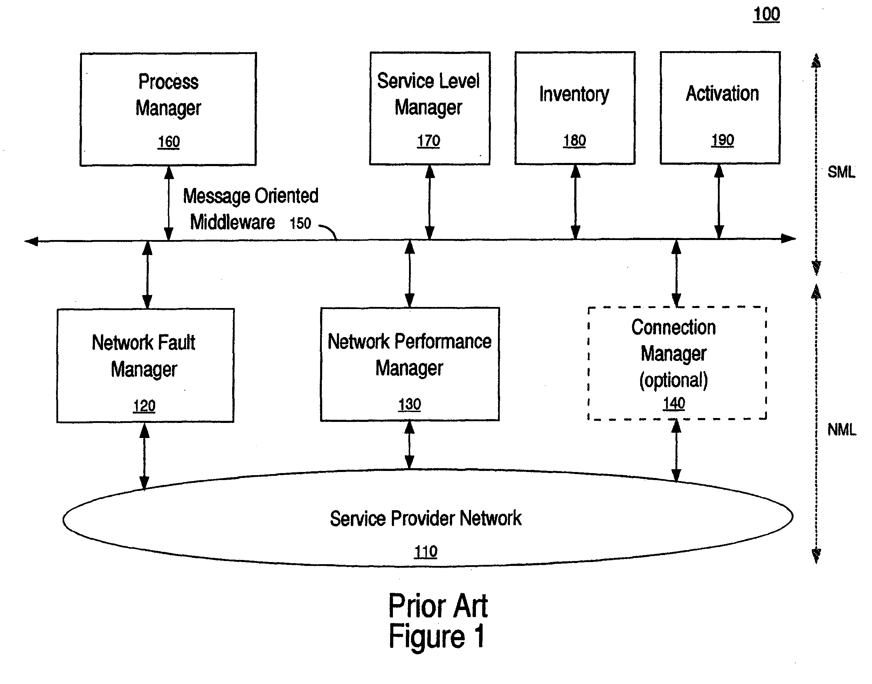

Typically; network monitoring systems receive information regarding the condition of a service provider network. This information may include, among many things, information about faults and about the performance of the network elements of the service provider network. One such network monitoring system is network monitoring system 100 of Prior Art Figure 1.

Referring now to Prior Art Figure 1, a block diagram of a conventional network monitoring system 100 is illustrated, in accordance with an embodiment of the conventional art. The lower portion of system 100, illustrated below message oriented middleware 150, is the network management level (NML) of network monitoring system 100. At the NML, there are a multitude of measurements performed at different points throughout the service provider network 110. These points are typically associated with the functioning of network elements such as switches and routers, for example, in a telecommunications service. For a value added service, these might look for lost frames in a streaming video, for example.

When a problem occurs with one of the monitored points, these measurements will be routed to a network fault manager (NFM) 120 and/or a network performance manager (NPM) 130. A fault, routed to NFM 120, would indicate an element in the network that has failed. Faults typically are binary-type failures. That is, elements in the network are either running or failed. Performance degradation, routed to NPM 130, could be considered more of an analog function, in that there are various degrees of degradation. For example, a video stream carrying a video conference may not be performing at its optimum, but it may still be adequate to carry the service so that the degradation would not be perceived by the audience. However, a measurement indicating the degradation in performance may be a symptom of something going wrong that might ultimately end in a fault.

NFM 120 and NPM 130 typically receive a very large number of inputs when an element fails or degrades in performance. Sensors at many different locations sense a change in performance when, for example, a router fails. Thus, information describing the router failure will be sent to the NFM 120, and there will be performance degradations that are associated with the router failure that will arrive at NPM 130. NFM 120 and NPM 130 have some intelligence for filtering out a certain amount of the redundant information they receive, but there is still a certain amount of redundancy that may not be detected.

Connection manager 140 may or may not reside on network monitoring system 100. Connection manager 140 is a subsystem that maintains an inventory of equipment and connections and can track changes that are made to the equipment within the service provider network 110.

Information available as output from NFM 120, NPM 130 and connection manager 140 is available to message oriented middleware 150, an Intelligent bus for directing traffic within network monitoring system 100. At the service management level (SML), above the message oriented middleware 150, the concern is with whether the provided service is meeting the customer service level agreements. NFM 120 and NPM 130 also can generate trouble tickets that are routed through a work flow and are made available to field service engineers or technicians so that they can make a decision regarding whether they need to swap out a piece of equipment and/or manually reconfigure the network 110.

Process manager 160 contains high level business logic, and is able to string together a number of tasks and output a complex procedure to be followed in responding to a potential problem or a failure, but with a high degree of latency. When it receives input from NFM 120 and/or NPM 130, it may generate a procedure for manually recovering from a problem based on Input from either connection manager 140 or from Inventory subsystem 180, the procedure then being made available for the field engineer or technician to follow.

Service level manager (SLM) 170 has a database of service level agreements and can determine the impact of a failure or performance level degradation, that is, if a service level agreement has been violated, based on information flowing from NFM 120 and NPM 130. Inventory 180 is a subsystem containing the inventory of network elements and may be used in the absence of, or in conjunction with, connection manager 140.

Activation subsystem 190 allows an engineer or technician to reconfigure the network elements when needed. Thus, if, for example, a router failed, a technician, having determined that there was a router in the system capable of carrying the traffic from the failed router, could manually reroute the traffic by reconfiguring the system through activation subsystem 190.

Currently, human intervention is required to analyze the information received from a service provider network to determine if it is possible to reconfigure the network in order to thwart a problem or a potential problem and if so, how to reconfigure it. Additionally, commands to reconfigure elements must be entered manually. Human Intervention is error-prone and time consuming, which can result in lost revenue.

### SUMMARY OF THE INVENTION

A method and system for proactively managing a network is disclosed. The method includes aggregating and consolidating inputs into real or potential service events and applying service policy for determining impact of the events and annotating the events. The method also includes determining the availability of an automated corrective action for the events. In addition, the method includes generating service level trouble tickets and dispatching the events to a service level manager for performing business-related activities. Additionally, when automated corrective action is deemed to be available, the method includes dispatching an activation subsystem to implement the corrective action.

### BRIEF DESCRIPTION OF THE DRAWINGS

Prior Art Figure 1 is a block diagram of a conventional network monitoring system.

Figure 2 is a block diagram of a network monitoring system employing a service event manager for pro-actively managing events at the service level, according to one embodiment of the present invention.

Figure 3 is a block diagram illustrating features of a service event manager, according to one embodiment of the present invention.

Figure 4 is a flow chart illustrating an overview of steps in a method employed by a service event manager for managing service level events, according to one embodiment of the present invention.

Figures 5A and 5B are a flow chart of the steps in a process for end-to-end pro-active management of service level events, according to one embodiment of the present invention.

Figure 6 is a block diagram of a generic computer system on which embodiments of the present invention may be performed.

### DETAILED DESCRIPTION OF THE INVENTION

Reference will now be made in detail to embodiments of the invention, examples of which are illustrated in the accompanying drawings. While the invention will be described in conjunction with the embodiments, it will be understood that they are not intended to limit the invention to these embodiments. On the contrary, the invention is intended to cover alternatives, modifications, and equivalents, which may be included within the spirit and scope of the invention as defined by the appended claims. Furthermore, In the following detailed description of the present invention, numerous specific details are set forth in order to provide a thorough understanding of the present invention. In other instances, well known methods, procedures, and components have not been described in detail so as not to unnecessarily obscure aspects of the present invention. A system and method for end-to-end management of service level events is described herein.

Some portions of the detailed descriptions which follow are presented in terms of procedures, logic blocks, processing, and other symbolic representations of operations on data bits within an electronic computing device and/or memory system. These descriptions and representations are the means used by those skilled in the data processing arts to most effectively convey the substance of their work to others skilled in the art. A procedure, logic block, process, etc., is herein, and generally, conceived to be a self-consistent sequence of steps or instructions leading to a desired result. The steps are those requiring physical manipulations of physical quantities. Usually, though not necessarily, these physical manipulations take the form of electrical or magnetic signals capable of being stored, transferred, combined, compared, and otherwise manipulated in a computer system or similar electronic computing device. For reasons of convenience, and with reference to common usage, these signals are referred to as bits, values, elements, symbols, characters, terms, numbers, or the like with reference to the present invention.

It should be borne in mind, however, that all of these terms are to be interpreted as referencing physical manipulations and quantities and are merely convenient labels and are to be interpreted further in view of terms commonly used in the art Unless specifically stated otherwise as apparent from the following discussions, it is understood that throughout discussions of the present invention, discussions utilizing terms such as "storing," "receiving," "processing," "applying," "utilizing," "accessing " "generating," "providing," "reconfiguring," "performing," "dispatching,'' "annotating," "activating.'' "aggregating.'' "consolidating," or the like, refer to the action and processes of a computer system, or similar electronic computing device, that manipulates and transforms data. The data is represented as physical (electronic) quantities within the computing device's registers and memories and is transformed into other data similarly represented as physical quantities within the computing device's memories or registers or other such information storage, transmission, or display devices.

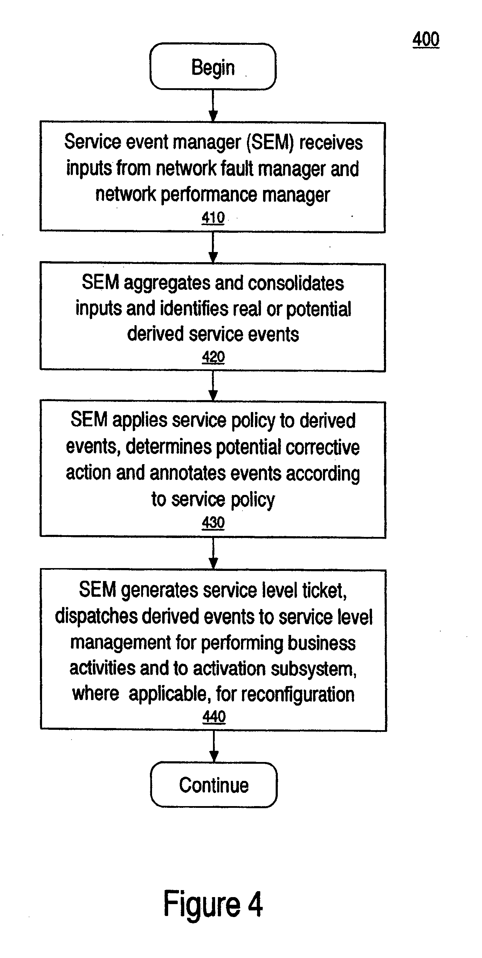

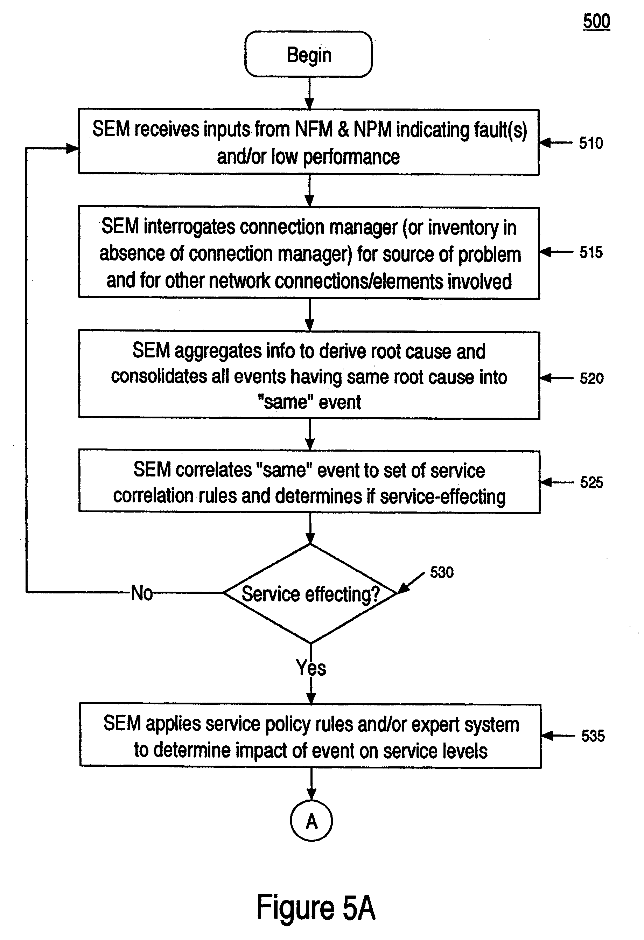

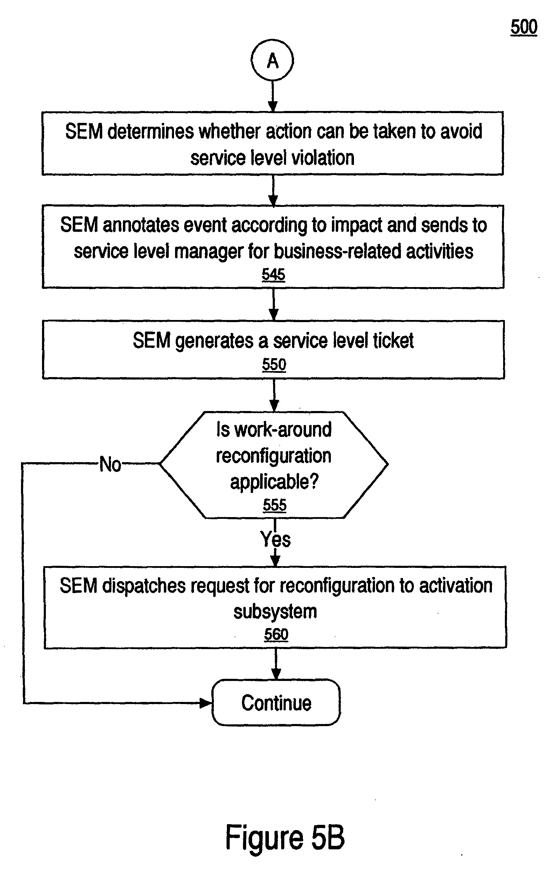

Certain portions of the detailed descriptions of embodiments of the invention, which follow, are presented in terms of processes and methods (e.g., methods 400 and 500 of Figures 4,5A and 5B). Although specific steps are disclosed herein describing the operations of these processes and methods, such steps are exemplary. That is, embodiments of the present invention are well suited to performing various other steps or variations of the steps recited in the flowcharts of the figures herein.

For service providers in today's highly competitive markets, it is important to be able to increase customer retention and growth rates while reducing costs. To meet these goals, service providers need to deliver value added services across a heterogeneous infrastructure both faster and more efficiently than before. The faster and more accurately a service can be delivered, the more revenue can be generated.

Manual methods of recovering from service faults and performance degradation are time consuming, prone to human error and a drain on staff resources. Embodiments of the present invention include a service event manager that is coupled to a message-oriented middleware at a service management layer. The service event manager provides a method to pro-actively respond to potential service level events so as to, whenever possible, provide resolutions before service level violations can occur. The service event manager is configured to receive inputs from a network fault manager and a network performance manager. The service event manager aggregates and consolidates the inputs into real or potential service events and applies service policy for determining impact of the events and annotating the events with additional information. The service event manager also determines the availability of an automated corrective action for said events. In addition, the service level manager generates service level trouble tickets and dispatches the events to a service level manager for performing business-related activities. When the automated corrective action is deemed to be available, the service event manager automatically dispatches an activation subsystem to reconfigure the system to a corrective configuration.

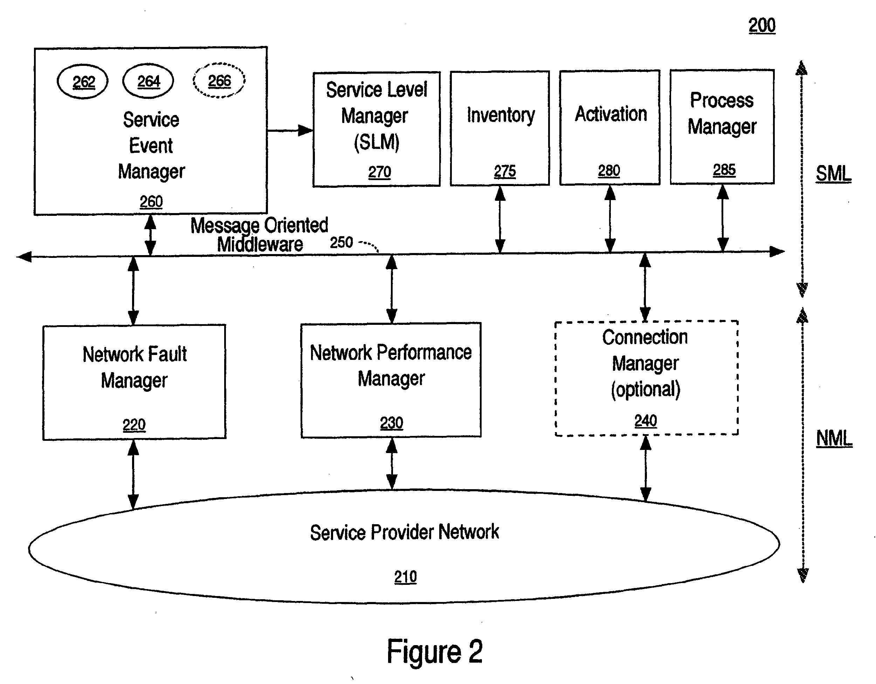

Referring now to Figure 2, a block diagram of a service provider system 200 employing a service event manager for pro-actively managing events at the service level is presented, according to one embodiment of the present invention. The lower portion of system 200, illustrated below message oriented middleware 250, is the network management level (NML) of service provider system 200. At the NML, there are a multitude of measurements performed at different points throughout the service provider network 210. These points are typically associated with the functioning of network elements such as switches and routers, for example, in a telecommunications service. These might look for lost frames in a streaming video, for example.

When a problem occurs with one of the monitored points, according to one embodiment, measurements taken at those points will be indicative of the type of problem that has occurred, either a fault or reduced performance, among other things, and information related to the problem Will be routed to a network fault manager (NFM) 220 of Figure 2 and/or a network performance manager (NPM) 230. A fault is defined as the failure of an element. Faults typically are binary-type failures. That is, they are either running or failed. Information regarding the fault is routed to NFM 220.

Still referring to Figure 2, performance degradation could be considered more of an analog function, in that there are various degrees of degradation. information describing a degradation in performance may be communicated to NPM 230. For example, a video stream carrying a video conference may not be performing at its optimum, but it may still be adequate to carry the service so that the degradation would not be perceived by the audience. However, a measurement Indicating the degradation in performance may be a symptom of something going wrong that might ultimately end in a fault.

Thus, it is prudent of a service provider to research the cause of any significant degradation in order to "head off" a serious problem before it becomes fatal to a piece of equipment and results in violations of a service level agreement In a conventional system, such as system 100 of Prior Art Figure 1, this research can be very time consuming and can sometimes prevent the chance of replacing a degraded piece of equipment before it fails and impacts the service level significantly.

In one embodiment, NFM 220 and NPM 230 of Figure 2 typically receive a very large number of inputs when an element fails or degrades in performance. For example, sensors at many different locations sense a change in performance when, for example, a router fails. Thus, information describing the router failure may be sent to the NFM 220. Further, there may be performance degradations that are associated with the router failure that will arrive at NPM 230.

NFM 220 and NPM 230 have some intelligence for filtering out a certain amount of the redundant information they receive, but there is still a certain amount of redundancy that may not be detected. For example, if a router is failing, it may send out a multitude of fault messages at frequent intervals. At the network side (southbound end), as these fault messages enter NFM 220, the NFM 220 may determine that they are coming from the same router and are really the result of the same fault. Then NFM 220 may then filter the multitude of messages into a single fault before sending it on to the message oriented middleware 250.

Referring still to Figure 2, connection manager 240 may, according to one embodiment, or may not, according to another embodiment, reside on service provider system 200. Connection manager 240 is a subsystem that maintains an inventory of equipment and connections and can track changes that are made to the equipment within the service provider network 210. Connection manager 240 has a high level of intelligence regarding the physical layout of service provider network 210 and, according to one embodiment, it can, upon invocation, configure or reconfigure network 210.

In one embodiment, information available as output from NFM 220, NPM 230 and connection manager 240 is available to message oriented middleware 250, an intelligent bus for directing traffic within service provider system 200. At the service management level (SML), above the message oriented middleware 250, the concern is with whether the provided service is meeting the customer service level agreements. NFM 220 and NPM 230 also forward information regarding faults or performance degradation to a trouble ticket system that generates trouble tickets to be routed through a work flow process and made available to field service engineers or technicians.

Still referring to Figure 2, at the service management level of service provider 200, shown by blocks above message oriented middleware 250, according to one embodiment of the present invention, there are a number of subsystems that Include a service level manager 270, a process manager 265, an inventory subsystem 275, an activation subsystem 280 and a service event manager 260.

According to one embodiment, service level manager 270 is configured to receive network information solely from the service event manager 260. The service level manager 270 may use a database of service level agreements and handle the business activities associated with a service level agreement Violation, based on information flowing from service event manager (SEM) 260.

In one embodiment, SEM 260 of Figure 2 receives input from NFM 220 and NPM 230 for potential problems existing at the network management level for all aspects of service, such as telecommunications services. At the service level, SEM 260 can aggregate and consolidate the inputs based on service correlations rules 262, apply policies obtained from policy rule store 264 and/or from expert system 266 and annotate events with additional information that is pertinent to the business activities to be performed by SLM 270. Then, according to one embodiment, SEM 260 can interrogate connection manager 240 if available, or, alternatively, inventory subsystem 275 and determine if, for a given fault or performance degradation, a reconfiguration is feasible to correct a problem or a potential problem.

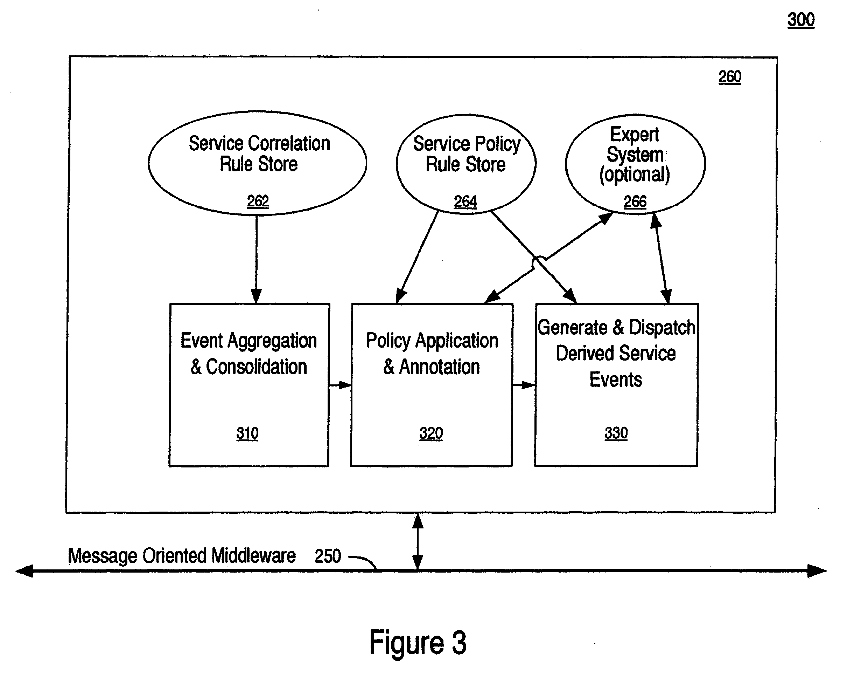

With the help of information from service policy rule store 264 and/or expert system 266, SEM 260 may, according to one embodiment, generate a service level trouble ticket and, when feasible, based on input from connection manager 240 or inventory 275, and in accordance with one embodiment, SEM 260 can dispatch an automatic system reconfiguration to connection manager 240 or to activation subsystem 280 for automatically performing the reconfiguration. Inventory 275 is a subsystem containing the Inventory of network elements and may be used in the absence of or in conjunction with connection manager 240. Although inventory 275 does not have the degree of intelligence present in connection manager 240, the intelligence may be supplied to SEM 260 via additional policy rules in policy rules store 264. SEM 260 also dispatches derived services events to SLM 270 for performing related business activities. SEM 260 is discussed in further detail in Figure 3.

Process manager 285 contains high level business logic, and is able to string together a number of tasks and output a complex procedure for customer service personnel to follow when responding to a customer regarding a potential problem or a failure. However, process manager 285 has a high degree of latency. Due to its inherent latency, process manager 285 is most useful in the present embodiment for service delivery tracking tasks. However, if SEM 260 needed to perform a number of tasks to create a complex end-solution to a problem or a "work-around," and time was not of a concern, SEM 260 might invoke process manager 285 to string the tasks together, generating a procedure that SEM 260 could then dispatch appropriately.

Referring now to Figure 3, a block diagram 300 illustrating features of a service event manager (SEM) 260 is presented, according to one embodiment of the present invention. Although specific functions of SEM 260 are discussed herein, it should be understood that these functions do not represent the totality of functions that may be performed by SEM 260, and should not limit the functionality of the SEM 260. Diagram 300 illustrates functions of SEM 260, starting from event aggregation and consolidation at the left and moving to the right Event aggregation and consolidation 310 is software embedded in SEM 260 that aggregates and consolidates events that SEM 260 receives from the NFM 220 and/or NPM 230 of Figure 2. For example, if a router has failed, SEM 260 may be receiving fault messages from NFM 220 as well as numerous performance degradation messages from NPM 230. The aggregation portion of event aggregation and consolidation 310 may determine that the router has failed and recognize that the performance degradation messages are related to the router failure. The consolidation function may consolidate the numerous fault and performance degradation messages into one or more derived events. Thus, the root cause of the problem is-determined to be the failed router, and the performance events messages may be ignored, knowing that once the network is automatically reconfigured to route traffic around the failed router, or the router is replaced, the performance will return.

According to one embodiment, event aggregation and consolidation 310 of Figure 3 then consults service correlation rules store 262 to determine the meaning of a derived event, in context of service level contracts. Service rules store 262 contains a set of service correlation rules that SEM 260 accesses when aggregating and consolidating events so that a derived event may be characterized in terms of its impact to service.

Still referring to Figure 3, the service correlation rules store 262 has several aspects of correlations, according to one embodiment. It may define, for example, a time window in which to determine if an event is a hard failure or a transient event. It may also correlate an event as to whether or not it is service related. If an event is determined by event aggregation and consolidation 310 as being a transient event, and its time is determined to be insignificant in terms of the correlation rules store 262, then SEM 260 would not propagate that event to the service level manager (e.g., SLM 270 of Figure 2). This prevents bombarding a service level manager with events that may be taken care of with retries of the equipment or that may resolve over time without intervention and would not impact a service contract.

In one embodiment, once SEM 260 of Figure 3 has a derived event, policy application and annotation 320 is entered. Here SEM 260 may consult service policy rule store 264 to determine how the derived event might impact service level policy. Policy application and annotation 320 also may consult connection manager (e.g., connection manager 240 of Figure 2) or, in the absence of a connection manager, an inventory subsystem (e.g., inventory subsystem 275 of Figure 2) to determine the net effect of the event. The net effect may include such considerations as the number of customers impacted, derived from service policy rules store 264, and whether equipment can be reconfigured to reroute traffic to avoid a significant impact while equipment is being repaired or replaced. At this point, if a system reconfiguration is determined to resolve the event, policy application and annotation determines from either the connection manager 240 or inventory subsystem 274 whether such a reconfiguration could be invoked automatically.

In one embodiment there is an optional expert system 266 available. Expert system 266 contains historical information regarding events and their solutions, which, when present for a sufficiently long time to build a large database, can often help to diagnose and provide solutions to events, based on past same or similar events. Policy application and annotation 320 would consult expert system 266 if it were available, to seek a fast resolution for an event.

Still referring to Figure 3, according to one embodiment, the primary aspect of policy application and annotation 320 is to determine if an event impacts service and, if so, whether something can be done quickly to reduce the service provider's exposure to service level violations. Once policy application and annotation 320 determines the impact of a derived services event and if a potential resolution of the event is possible and whether that resolution is in the form of an automated action, it may then annotate the event accordingly and SEM 260 moves on to Generate and Dispatch Derived Services Events (GD) 330.

Once SEM 260 determines what it needs to do and whether or not it can do it, GD 330, according to one embodiment, may carry out the actions. For example, GD 330 may be configured to perform, among other things, three actions. First, it may generate and dispatch a notification of the derived service event to a service level manager (e.g., SLM 270 of Figure 2) that deals with the business aspects of the service level agreements.

A second action taken by GD 330 of Figure 3 is to generate and dispatch a service ticket, according to one embodiment. Although the NFM 220 and NPM 230 send out information to a trouble ticket system to generate trouble tickets, the tickets they generate are primarily for an operator or a field engineer to use to restore service. A service ticket as generated by GD 330 may be made available to a customer service representative for responding to customer calls. By generating a service ticket in addition to dispatching the event to the service level manager, GD 330 assures that there can be complete traceability of events. Each event that is dispatched to the service level manager also has a service ticket generated and made available to customer service.

Thirdly, In accordance with one embodiment, GD 330 may invoke an automatic resolution that was identified by policy application and annotation 320. This invocation may, according to one embodiment, be through a connection manager, if one exists, or, in another embodiment, directly through an activation subsystem (e.g., activation 280 of Figure 2).

Referring still to Figure 3, service event manager 260 is, according to one embodiment, configured with tools to allow entry and update of service correlation rules 262 and service policy rules 264, as well as expert system 266 when applicable. SEM 260 is configured to allow service event correlations, consolidations, rationalizations and aggregations to be added or modified as changes occur in both equipment and knowledge. Other additions or modifications which may be made within SEM 260 include definitions of derived service events for annotation to other systems.

Figure 4 is a flow chart illustrating an overview of steps in a method 400 employed by a service event manager for managing service level events, according to one embodiment of the present invention. Figure 4 will be discussed in concert with the elements of Figures 2 and 3 in order to more dearly illustrate the steps in method 400.

At step 410 of Figure 4, according to one embodiment, SEM 260 receives inputs from NFM 220 and NPM 230. These inputs indicate a potential fault or performance degradation within service provider network 210. A fault, or hard failure, of a network element, such as a switch or router, may cause a degradation in the performance of other network elements. Thus, an input from NFM 220 may be related to a large number of messages received from NPM 230. Also, the degradation of performance of an element or elements may be an indicator of an eminent fault. In the latter case, if it were possible to recognize the potential for such a fault and to respond rapidly with an automatic reconfiguration of the network. For example, the network may be automatical reconfigured to reroute traffic around a failed router or switch.

At step 420 of method 400, in accordance with one embodiment, SEM 260 aggregates and consolidates the inputs from NFM 220 and/or NPM 230 and identifies, where applicable, a derived service event or events and determines the root cause and whether or not the event(s) may impact service. This determination is made by consulting a service correlation rules store 262, among other things. For example, a failed switch is checked against a list of items in the correlation rule store that could cause a potential service level violation. If it is determined that, indeed, the particular switch that is failed may impact service to customers, then the failed switch becomes a service level event.

At step 430 of Figure 4, according to one embodiment, SEM 260 applies service policy to derived service events. The service policy is available as a set of service policy rules residing in a service policy rules store 264 portion of memory in subsystem SEM 260. The service policy rules are used to help determine the net effect of a derived event. The net effect may include such considerations as the number of customers impacted, derived from a service policy rules store (e.g., service policy rule store 264 of Figures 2 and 3). From the service policy and, in one embodiment, an expert system, plus a connection manager or inventory subsystem, SEM 260 determines if there is a potential action that could be taken to quickly resolve the event. For example, if a piece of equipment, such as a switch, is failed or failing, could the network be reconfigured to route traffic around the switch until it could be replaced, thus avoiding service impact. At this point, SEM 260 annotates the event according to its definition and disposition.

Referring still to Figure 4, at step 440, SEM 260, in accordance with one embodiment, generates a service level trouble ticket. The SEM 260 also dispatches the annotated event to a service level manager 270 for performing any necessary and/or related business activities. If an automated resolution is determined to be appropriate, SEM 260 invokes activation subsystem 280, either directly or through connection manager 240, to reconfigure the network in avoidance of a service level violation. At this point, method 400 is exited. However, the network monitoring system 200 continues to monitor the network for faults and/or performance degradation, among other things.

Figures 5A and 5B are a flow chart of the steps in a process 500 for end-to-end pro-active management of service level events, according to one embodiment of the present invention. At step 510, a service event manager (SEM) (e.g., SEM 260 of Figures 2 and 3) receives inputs from a network fault manager (NFM) (e.g., NFM 220 of Figure 2) and a network performance manager (NPM) (e.g., NFM 230 of Figure 2) indicating one or more faults or low performance on a service provider network (e.g. service provider network 210 of Figure 2).

At step 515 of Figure 5A,in one embodiment the SEM interrogates a connection manager, (e.g., connection manager 240 of Figure 2) or, in the case of no connection manager, an inventory subsystem (e.g., inventory 275 of Figure 2) to try to determine the source of the problem and to determine what other network connections or elements might be involved.

At step 520 of process 500, according to one embodiment, the SEM aggregates the information it has received from the connection manager and/or inventory subsystem to try to derive a root cause. The SEM may consolidate events having the same root cause into a single or "same" event.

Moving next to step 525 of process 500 in Figure 5A, in one embodiment, the SEM correlates the derived "same" event to a set of service correlation rules to determine if it affects service level policies. The service correlation rules are contained in a service correlations rule store in memory and are readily available to the SEM.

At step 530 of process 500, according to one embodiment, if it is determined that the derived event is not service-affecting, then process 500 is exited and the SEM continues to monitor the network activity. If the event is determined to affect service, then process 500 proceeds to step 535.

At step 535 of Figure 5A, according to one embodiment, the SEM applies service policy rules to the event in order to determine the extent of impact the event could have on service levels. For example, the SEM determines how many customers might be affected and what actions might be taken to avoid or to lessen the impact of the event In one embodiment there is an expert system, (e.g., expert system 266 of Figures 2 and 3) available to the SEM. The expert system typically contains historical information regarding events and their solutions, which, when present for a sufficiently long time to build a large database, can often help to diagnose and provide solutions to events, based on past same or similar events, in a very brief period of time. The SEM could consult the expert system, if it were available, to seek a fast resolution for an event

Referring now to Figure 5B, at step 540 of process 500, in one embodiment, the SEM consults either the connection manager or inventory subsystem and/ or the expert system, if available, to see if there might be an action that could be taken, such as a work-around reconfiguration, which would allow service to continue without interruption while an element was being repaired or replaced.

At step 545. according to one embodiment, the SEM annotates the event with additional- information regarding its nature and impact and sends it to a service level manager (e.g., SLM 270 of Figure2) for performing any appropriate customer-related business-related activities, such as, for example, generating a report to affected customers outlining details of the event and corrective actions taken.

At step 550 of process 500 the SEM generates a service level ticket in accordance with one embodiment This is similar to a trouble ticket that is generated at the network level by either a network fault manager or a network performance manager, but may reflect the culmination of several trouble tickets, and may have higher priority in that the service level ticket indicates a service-affecting event

Proceeding to step 555 of Figure 5B, according to one embodiment, the SEM checks to see if the event can be resolved by an automatic reconfiguration of the network. If it is not feasible, process 500 is exited and the SEM continues monitoring the network for performance degradation or faults, among other things. If an automatic action is feasible, then process 500 moves to step 560.

At step 560, according to one embodiment, the SEM dispatches a request for reconfiguration to the activation subsystem. This request may be sent via a connection manager, if the service provider system has one. Otherwise, the request may be sent directly to the activation subsystem. At this point, process 500 is exited and the SEM continues to monitor the network for service level events.

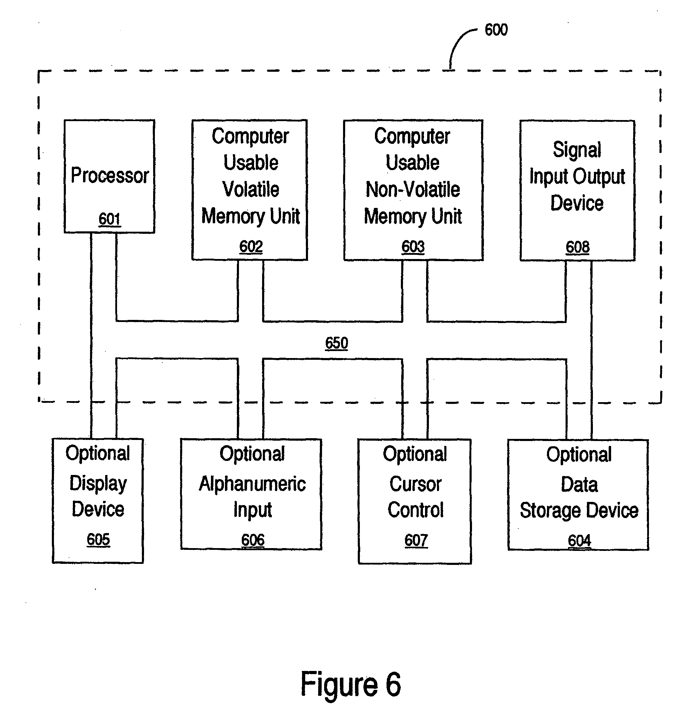

Refer now to Figure 6. The software components of embodiments of the present invention run on computers. A configuration typical to a generic computer system is illustrated, in block diagram form, in accordance with one embodiment of the present invention, in Figure 6. Generic computer 600 is characterized by a processor 601, connected electronically by a bus 650 to a volatile memory 602, a non-volatile memory 603, possibly some form of data storage device 604 and a display device 605. It is noted that display device 605 can be implemented in different forms. While a video cathode ray tube (CRT) or liquid crystal diode (LCD) screen is common, this embodiment can be implemented with other devices or possibly none. System management is able, with this embodiment of the present invention, to determine the actual location of the means of output of alert flags and the location is not limited to the physical device in which this embodiment of the present invention is resident.

Similarly connected via bus 650 are a possible alpha-numeric input device 606, cursor control 607, and signal I/O device 608. Alpha-numeric input device 606 may be implemented as any number of possible devices, including video CRT and LCD devices. However, embodiments of the present invention can operate in systems wherein intrusion detection is located remotely from a system management device, obviating the need for a directly connected display device and for an alpha-numeric input device. Similarly, the employment of cursor control 607 is predicated on the use of a graphic display device, 605. Signal input/output (I/O) device 608 can be implemented as a wide range of possible devices, including a serial connection, universal serial bus (USB), an infrared transceiver, a network adapter or a radio frequency (RF) transceiver.

The configuration of the devices in which this embodiment of the present invention is resident can vary without effect on the concepts presented here. This description of the embodiments of the present invention presents a system and method for managing service events, utilizing a service events manager that resides at the service management level of a telecommunications service system.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method (400) of proactively managing a network (200), comprising:
aggregating and consolidating a plurality of inputs into real or potential service events (420);
applying service policy for determining impact of said events (430);
annotating said events and assessing availability of an automated corrective action (430); and
generating service level trouble tickets and dispatching said events to a service level manager for performing business-related activities and, when said automated corrective action is deemed to be available, to an activation subsystem for implementing said corrective action (440).

2. The method as described in Claim 1 further comprising interrogating a connection manager for determining availability of said automatic solution (515).

3. The method as described in Claim 1 wherein said service policy is derived from a service policy rule store (264).

4. The method as described in Claim 3 wherein said impact is derived from said service policy rules store (264).

5. The method as described in Claim 3 wherein said impact is derived from an expert system (266).

6. The method as described in Claim 3 wherein said generating and dispatching is based on input from said expert system (266).

7. A system for providing end-to-end client services in a network (200), said system comprising:
a message oriented middleware (250);
a network fault manager (220) coupled to said message-oriented middleware (250) at a network management layer and to a service provider network (210);
a network performance manager (230) coupled to said message-oriented middleware (250) at said network management layer and to said service provider network (210); and
a service event manager (260) coupled to said message-oriented middleware (250) at a services management layer, said services event manager (260) configured to receive input from said network fault manager (220) and said network performance manager (230) and to proactively detect and determine a real or potential service event, taking immediate and automatic action, when said action is deemed applicable, to correct or avoid said service event.

8. The system as described in Claim 7 further comprising a service level manager (270) coupled to said message-oriented middleware (250) at said services management layer, said service level manager (270) comprising information regarding client service agreements.

9. The system as described in Claim 8 further comprising:
an inventory system (275) coupled to said message-oriented middleware (250) at said services management layer for maintaining an inventory of network elements; and
an activation system (280) coupled to said message-oriented middleware (250) at said services management layer for activating said network elements.

10. The system as described in Claim 9 further comprising a connection manager (240) coupled to said message-oriented middleware (250) at said network management layer and to said service provider network (210), said connection manager (240) comprising information regarding connections among said network elements.
